# EUROPEAN PATENT APPLICATION

(11) **EP 2 692 552 A2**
(43) Date of publication of application: **05.02.2014**
(21) Application number: 13178447.2
(22) Date of filing: 30.07.2013
(51) Int. Cl.: B60C 23/12

(54) **Air-maintenance tire**

(30) Priority: 30.07.2012 US 201213561168
(71) Applicant: The Goodyear Tire & Rubber Company, Akron, Ohio 44316 (US)
(72) Inventor: Frantzen, Andreas, D-54292 Trier (DE); Agostini, Giorgio, L-7733 Colmar-Berg (LU)
(74) Representative: Kutsch, Bernd

(57) **Abstract**

An air-maintenance tire is disclosed having a tire carcass (12) comprising a tire cavity (30) defined by a tire inner liner, first and second sidewalls (14) extending respectively from first and second tire bead regions (16) to the tire tread region (18); compression actuator means (19) mounted to the tire carcass (12) configured for operative actuation by tire deformation during a tire revolution; and a pump assembly (20) affixed to the tire carcass (12) and comprising a compressor body affixed to the compression actuator means (19) and having an internal air chamber, the air chamber having an inlet opening for admitting air into the internal air chamber and an outlet opening for conducting air from the internal air chamber to the tire cavity (30). The air compressor body further comprises (i) a membrane valve member deforming into a deformed state within the internal air chamber responsive to actuation by the compression actuator means to compress air within the internal air chamber; or (ii) a flexible membrane member located within the internal air chamber and operatively deforming within the internal air chamber responsive to contacting engagement with the compression actuator means between an open position relative to the inlet opening wherein permitting air flow from the inlet opening into the air chamber and a closed position relative to the inlet opening wherein obstructing air flow from the inlet opening into the air chamber, wherein the membrane member during operational deformation between the open and closed positions compresses a volume of air within the air chamber. The tire (10) further comprises a hook-and-loop system (200) for securing the compression actuator means (19) and the compressor body to the tire carcass (12).

## Description

### Field of Invention

The invention relates generally to pneumatic tires and, more specifically, to bonding structures to a pneumatic tire.

### Background

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems (TPMS) have been proposed to warn drivers when tire pressure is significantly low. Such systems, however, remain dependant upon the driver taking remedial action when warned to re-inflate a tire to recommended pressure. It is a desirable, therefore, to incorporate an air maintenance feature within a tire that will auto-maintain air pressure within the tire.

### Summary

The invention relates to an air-maintenance tire in accordance with claim 1.

Dependant claims refer to preferred embodiments of the invention.

A first air-maintenance tire in accordance with the present invention includes: a tire having a tire carcass comprising a tire cavity defined by a tire inner liner and first and second sidewalls extending respectively from first and second tire bead regions to a tire tread region; compression actuator means mounted to the tire carcass and configured for operative actuation by tire deformation during a tire revolution; and a pump assembly affixed to the tire carcass and comprising a compressor body affixed to the compression actuator means and having an internal air chamber. The air chamber has an inlet opening for admitting air into the internal air chamber and an outlet opening for conducting air from the internal air chamber to the tire cavity. The compressor body further includes a flexible membrane member located within the internal air chamber and operatively deforming within the internal air chamber responsive to contacting engagement with the compression actuator means between an open position relative to the inlet opening permitting air flow from the inlet opening into the air chamber and a closed position relative to the inlet opening obstructing air flow from the inlet opening into the air chamber. The membrane member during operational deformation between the open and closed positions compresses a volume of air within the air chamber. The first air-maintenance tire further includes a hook-and-loop system for securing the compression actuator means and the compressor body to the tire carcass.

According to another aspect of the first air-maintenance tire, the hook-and-loop system preferably includes a first patch with loops and a corresponding second patch with hooks.

According to still another aspect of the first air-maintenance tire, the hook-and-loop system preferably includes a first patch co-vulcanized with the tire carcass and a second patch secured to the compression actuator means and the compressor body.

According to yet another aspect of the first air-maintenance tire, the hook-and-loop system preferably includes a first patch with loops secured to the tire carcass.

According to still another aspect of the first air-maintenance tire, the hook-and-loop system preferably includes a second patch with hooks secured to the compression actuator means and the compressor body.

According to yet another aspect of the first air-maintenance tire, an outlet valve member may be disposed within the air chamber and moves along the air chamber responsive to air pressure within the air chamber reaching a preset threshold between an open position permitting air flow from the air chamber into the outlet opening and a closed position obstructing air flow from the air chamber into the outlet opening.

According to still another preferred aspect of the first air-maintenance tire, the membrane valve member and the outlet valve member are positioned at opposite ends of the air chamber.

According to yet another preferred aspect of the first air-maintenance tire, an inlet conduit extends through the tire between the inlet opening and an outward facing side of the tire.

According to still another preferred aspect of the first air-maintenance tire, an outlet conduit extends from the outlet opening to the tire cavity.

According to yet another preferred aspect of the first air-maintenance tire, the compression actuator means includes a hollow containment body formed from a resilient deformable material composition and containing a quantity of a non-compressible medium. The containment body is affixed to a relatively high flex-deformation region of the tire carcass and the containment body reciprocally transforms between a deformed state and a non-deformed state responsive to deformation and recovery of the tire high flex-deformation region in a rolling tire, respectively. The actuator means containment body in the deformed state displaces a pressurized quantity of the non-compressible medium. The pressurized quantity of the non-compressible medium operates to generate a compression force against a membrane valve member surface to move the membrane valve between the open and closed positions within the air chamber.

According to still another preferred aspect of the first air-maintenance tire, the containment body operationally undergoes a cyclic transformation between the deformed state and the non-deformed state during a tire revolution against a ground surface.

A second air-maintenance tire in accordance with the present invention includes: a tire having a tire carcass with a tire cavity defined by a tire inner liner and first and second sidewalls extending respectively from first and second tire bead regions to a tire tread region; compression actuator means mounted to the tire carcass and configured for operative actuation by tire deformation during a tire revolution; and a pump assembly affixed to the tire carcass. The pump assembly includes a compressor body affixed to the compression actuator means and having an internal air chamber. The air chamber has an inlet opening for admitting air into the internal air chamber and an outlet opening for conducting air from the internal air chamber to the tire cavity. The compressor body further includes a membrane valve member and an outlet valve member located within, and at opposite respective ends, of the internal air chamber. The membrane valve member and the outlet valve member move within the internal air chamber responsive to actuation by the compression actuator means between respective open and closed positions. Cyclic opening and closing of the inlet and the outlet openings during an air compression cycle includes air intake, air compression, and air discharge within the air chamber. The second air-maintenance tire system further includes a hook-and-loop system for securing the compression actuator means and the compressor body to the tire carcass.

According to a preferred aspect of the second air-maintenance tire, the membrane valve member in the open position relative to the inlet opening permits air flow from the inlet opening into the air chamber and the piston valve member in the closed position relative to the inlet opening obstructs air flow from the inlet opening into the air chamber. The membrane valve member during movement between the open and closed positions operatively compresses a volume of air within the air chamber.

According to another preferred aspect of the second air-maintenance tire, the outlet valve member in the closed position relative to the outlet opening is operative to move to the open position responsive to air pressure within the air chamber reaching a preset threshold permitting air flow from the air chamber into the outlet opening.

According to yet another preferred aspect of the second air-maintenance tire, an inlet conduit extends through the tire between the inlet opening and an outward facing side of the tire.

According to still another preferred aspect of the second air-maintenance tire, an outlet conduit extends from the outlet opening to the tire cavity.

According to yet another preferred aspect of the second air-maintenance tire, the compression actuator means includes a hollow containment body formed from a resilient deformable material composition and containing a quantity of a non-compressible medium. The containment body is affixed to a relatively high flex-deformation region of the tire carcass and the containment body reciprocally transforms between a deformed state and a non-deformed state responsive to deformation and recovery of the tire high flex-deformation region in a rolling tire, respectively. The actuator means containment body in the deformed state displaces a pressurized quantity of the non-compressible medium. The pressurized quantity of the non-compressible medium operates to generate a deformation force against a membrane valve member surface to deform the membrane valve member between the open and closed positions within the air chamber.

According to still another preferred aspect of the second air-maintenance tire, the containment body operationally undergoes a cyclic transformation between the deformed state and the non-deformed state during a tire revolution against a ground surface.

A third air-maintenance tire in accordance with the invention includes: a tire having a tire carcass with a tire cavity defined by a tire inner liner and first and second sidewalls extending respectively from first and second tire bead regions to a tire tread region; compression actuator means mounted to the tire carcass and configured for operative actuation by tire deformation during a tire revolution; and a pump assembly affixed to the tire carcass. The pump assembly includes a compressor body affixed to the compression actuator means and having an internal air chamber. The internal air chamber has an inlet opening for admitting air into the internal air chamber and an outlet opening for conducting air from the internal air chamber to the tire cavity. The air compressor body further includes a membrane valve member deforming into a deformed state within the internal air chamber responsive to actuation by the compression actuator means to compress air within the internal air chamber. The third air-maintenance tire system further includes a hook-and-loop system for securing the compression actuator means and the compressor body to the tire carcass.

According to a preferred aspect of the third air-maintenance tire, an outlet valve member is located within the internal air chamber. The outlet valve member operatively moves relative to the internal air chamber between an open position permitting a flow of compressed air from the internal air chamber into the outlet opening and a closed position obstructing a flow of compressed air from the internal air chamber into the outlet opening.

### Definitions

"Axial" and "axially" means lines or directions that are parallel to the axis of rotation of the tire.

"Chafer" is a narrow strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
FIG. 1 is a schematic perspective cut away of an example tire showing a two-part pump secured to the example tire in accordance with the present invention.
FIG. 2A is a schematic perspective cut away of the example tire showing the 2-part pump before assembly, and the phantom box shown to illustrate a glue area on the inner wall.
FIG. 2B is a schematic perspective cut away of tire showing the 2-part pump assembled with tube inserted through the inner wall.
FIG. 3A is a schematic side view showing a pump location in a non-compressed area of example tire.
FIG. 3B is a schematic side view showing a pump location in a compressed area of example tire.
FIG. 4 is a schematic sectioned view taken from 4-4 of FIG.3A.
FIG. 5 is a schematic sectioned view taken from 5-5 of FIG.3B.
FIG. 6A is an enlarged schematic view of the pump showing piston locations at rest.
FIG. 6B is an enlarged schematic view of the pump showing a viscoelastic material moving the upper piston downward and compressing air between the pistons.
FIG. 6C is an enlarged schematic view of the pump showing the upper and lower pistons moving and releasing compressed air into the tire cavity.
FIG. 6D is an enlarged schematic view of the pump showing the pistons at rest and the relief valve cavity releasing air over pressure to atmosphere.
FIG. 7 is an exploded schematic cross section of a pump body.
FIG. 8 is a schematic perspective view of the example tire showing a different location of the pump.
FIG. 9A is a schematic perspective view of the exploded 2-part pump of the second location.
FIG. 9B is a schematic perspective view of an assembled pump.
FIG. 10A is a schematic side view showing a pump location in non-compressed area of the example tire.
FIG. 10B is a schematic side view showing a pump location in a compressed area of the example tire.
FIG. 11 is a schematic sectioned view taken from 11-11 of FIG.10A.
FIG. 11A is an enlarged schematic view of the pump taken from FIG.11.
FIG. 12 is a schematic sectioned view taken from 12-12 of FIG.10B.
FIG. 12A is an enlarged schematic view of the pump taken from FIG.12.
FIG. 13A is a schematic sectioned view taken from 13A-13A of FIG.11A with the pump shown at rest.
FIG. 13B is a schematic sectioned view taken from 13B-13B of FIG. 12A, with a viscoelastic material filling the chamber and pushing air through a second one-way valve into the tire cavity.
FIG. 13C is a schematic sectioned view showing viscoelastic material returning to the upper housing and pulling outside air through the first one-way valve and filling the inner chamber.
FIG. 13D is a schematic sectioned view showing the relief valve cavity releasing air over pressure to the atmosphere.
FIG. 14A is a schematic perspective view of a pump body insert.
FIG. 14B is a schematic perspective cross section view of the pump body insert.
FIG. 14C is a schematic perspective exploded cross section view of the pump body insert.
FIG 15 is a schematic sectioned view showing a modified version of a piston pump and compression actuator assembly attached to a tire innerliner.
FIG. 16 is a schematic bottom perspective view of the piston pump assembly.
FIG. 17A is an enlarged schematic section view of a membrane pump taken from FIG. 16 showing the pump at rest with outside air entering the inlet chamber.
FIG. 17 B is a schematic view subsequent to FIG. 17A, showing viscoelastic material filling the pump housing chamber and pushing the membrane valve member inward to seal off the inlet, and the pressurized air forcing the outlet valve plug member downward to open the outlet and release air to the tire cavity.
FIG. 18A is a schematic sectioned isometric view of the pump assembly shown in FIG. 17A.
FIG. 18B is a schematic exploded view of FIG. 18A.
FIG. 19A is a schematic view of a rolling tire showing sequential positionment of the pumping assembly as the tire rotates.
FIG. 19B is a diagrammatic view showing the pump operation at the sequential positions of FIG 19A.
FIG. 20 is a graph of pumping pressure over a time interval as the example tire rotates.
FIG. 21 is a schematic perspective view of the example tire system showing a first pump location.

### Detailed Description of Example Embodiments of the Present Invention

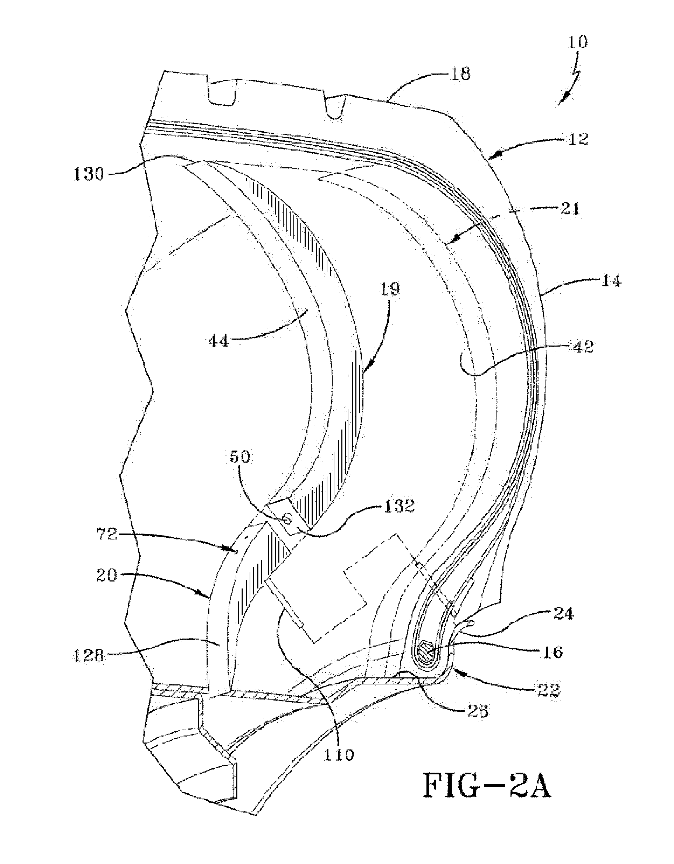

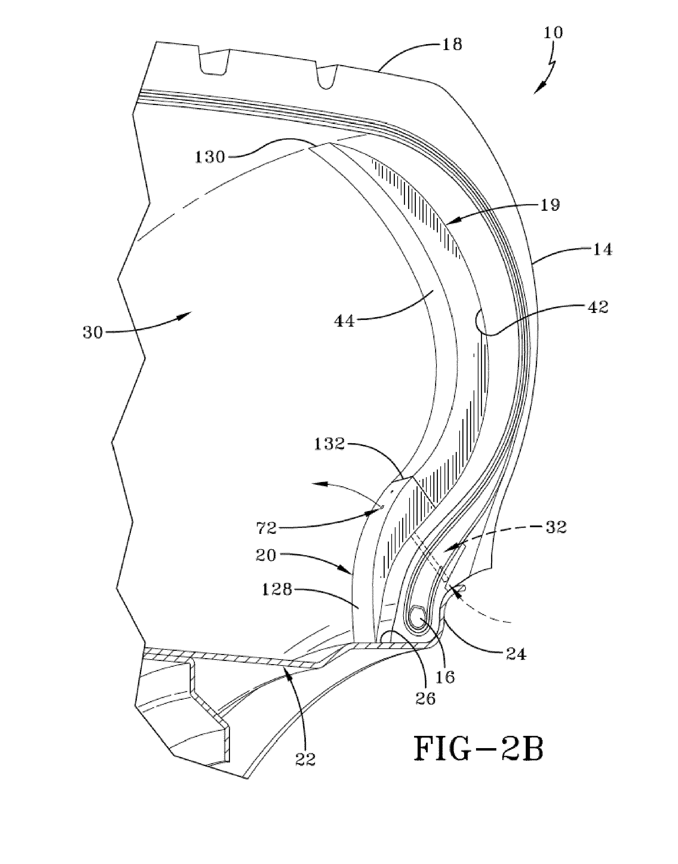

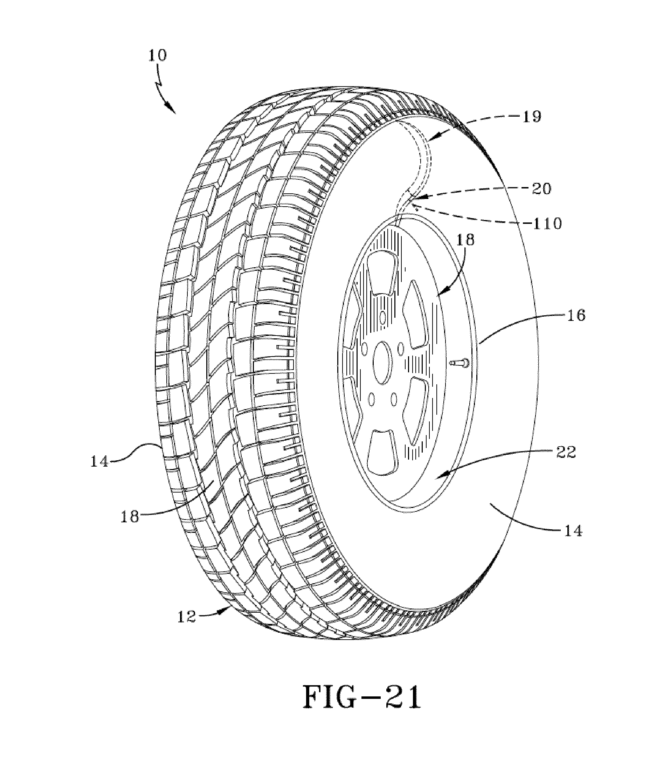

Referring to FIGS. 21, 2A, 2B, 3A, 3B, and 4, an example Self-Inflating Tire System (SITS) or air maintenance tire 10 is shown to include a tire carcass 12 having a pair of sidewalls 14, a pair of beads 16, and a tread 18. The tire 12 may be configured to be self-inflating by inclusion of a pump assembly 20 and coupled compression actuator assembly 19, both of which being attached to the tire in a post-cure assembly procedure. As shown in FIG. 2A, the assembly 19 is mounted to a sidewall 14 by application of adhesive as shown in phantom as adhesive area 21. The tire 12 mounts to a rim 22, having a tire mounting surface 26 and an outer rim flange 24 extending from surface 26. The tire 12 may further be formed to provide an inner liner component 28 which defines and encloses an internal tire air cavity 30. Adhesive may be applied to the sidewall region of the inner liner 28 as depicted by area 21. The tire 12 may further provide a lower sidewall region 32 proximate to the bead areas 16 of the tire.

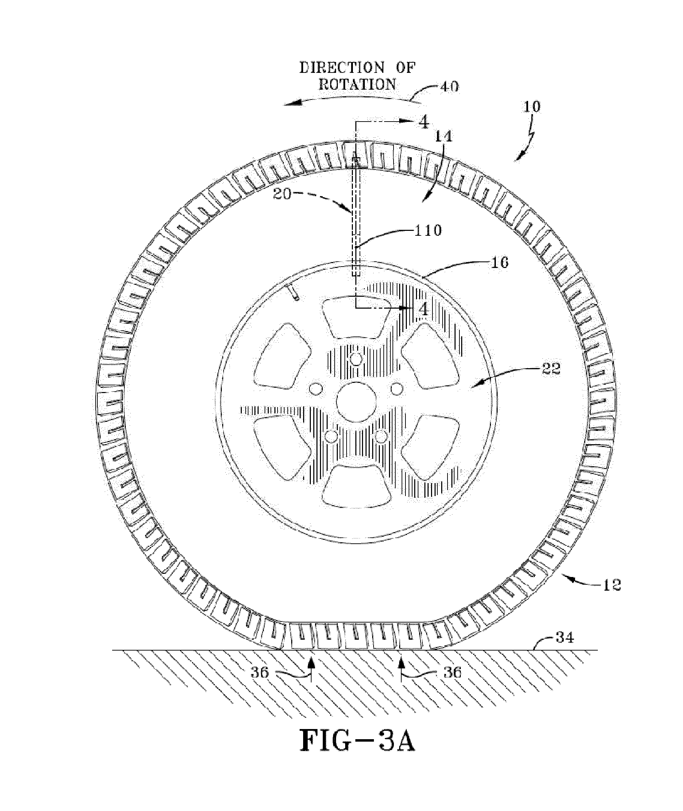

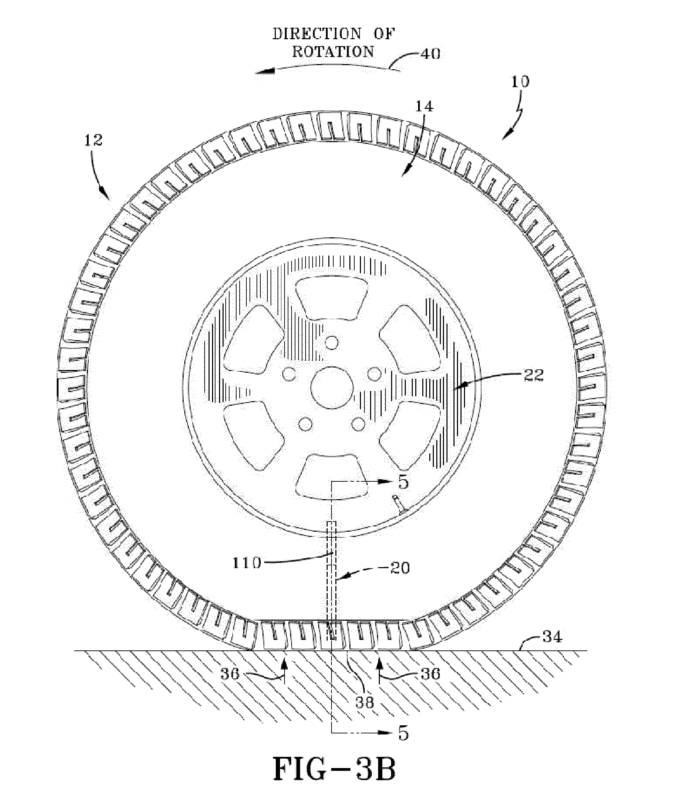

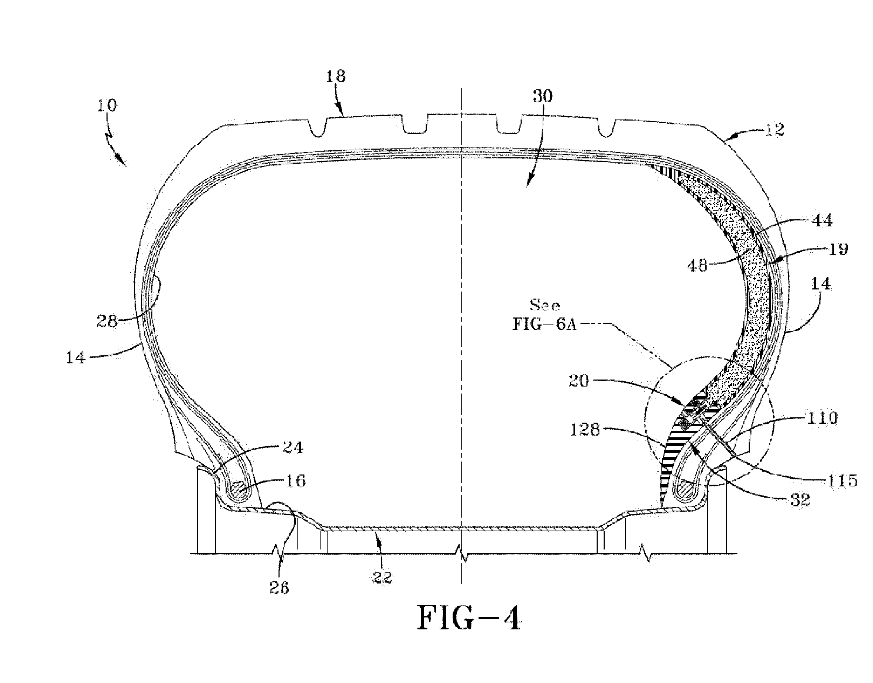

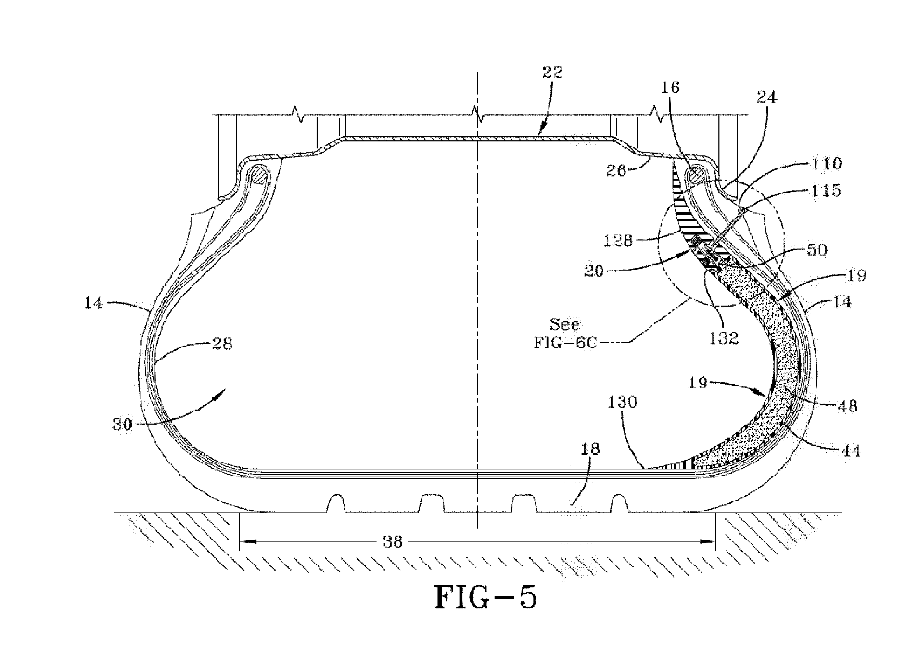

The example tire assembly 10 mounts to a vehicle and engage a ground surface 34. Contact area between the tire 12 and the ground surface 34 represents the tire footprint 38. The compression actuator assembly 19 may mount to a sidewall region 42 of the tire 12 having a relatively high flex-deformation as the tire rotates in direction 40 against a ground surface 34 as shown in FIGS. 3A and 3B. As the tire 12 rotates, the compression actuator assembly 19 and pump assembly 20 rotates with the tire. The compression actuator assembly 19 is subjected to compression forces resulting from the sidewall flexing or bending when the assembly 19 is adjacent the tire footprint 38, as explained below. FIG. 3A and section view FIG. 4 show the example compression actuator assembly 19 and pump assembly 20 location in a non-compressed area of the tire 12 while FIG. 3B and section view FIG. 5 show the assemblies 19 and 20 in a compressed area of the tire. In the position of FIG. 5, the compression actuator assembly 19 may be subjected to the compression forces 36 generated within tire footprint 38. The tire 12 rotates in direction 40 and in the opposite direction during normal operation of a vehicle. As such, the coupled assemblies 19, 20 rotate with the tire 12 in both directions and are subjected to compression forces generated within the sidewall 14 in both forward 40 and reverse tire rotational directions.

In reference to FIGS. 2A, 2B, 4, 5, 6A, 6B, 6C, 6D, and FIG. 7, the compression actuator assembly 19 includes an elongate hollow containment body 44 formed from a resilient deformable material composition, such as thermoplastic resin and/or rubber compound. The body 44 is capable of reciprocally and resiliently undergoing a cyclic deformation into a deformed state and recovery into an original non-deformed state when subjected to bending force. The elongate body 44 as shown in FIG. 2A, 4, is sized and shaped to generally follow the inner contour of the tire sidewall 14 from the tread region 18 to the bead area 16. The hollow, elongate form of the containment body 44 is affixed to the inner liner 28 of the tire at adhesive region 21 or modified in form for incorporation into the tire sidewall, as explained below.

The containment body 44 includes an enclosed central reservoir cavity 46 filled with a volume of non-compressible medium 48. The medium 48 may be in either solid or liquid (e.g., foam or fluid). A medium 48 suitable for use in the subject application includes, but is not limited to, water with an antifreeze additive. The medium 48 is enclosed by the body 44 within the cavity 46 and generally may fill the cavity 46. An outlet conduit 50 is provided to the body 44 with the conduit 50 extending generally axially from the body and containing an inner outlet conduit bore 51 through which a displaced quantity of the medium 48 may travel in reciprocal directions. The conduit 50 extends to a leading end surface 60.

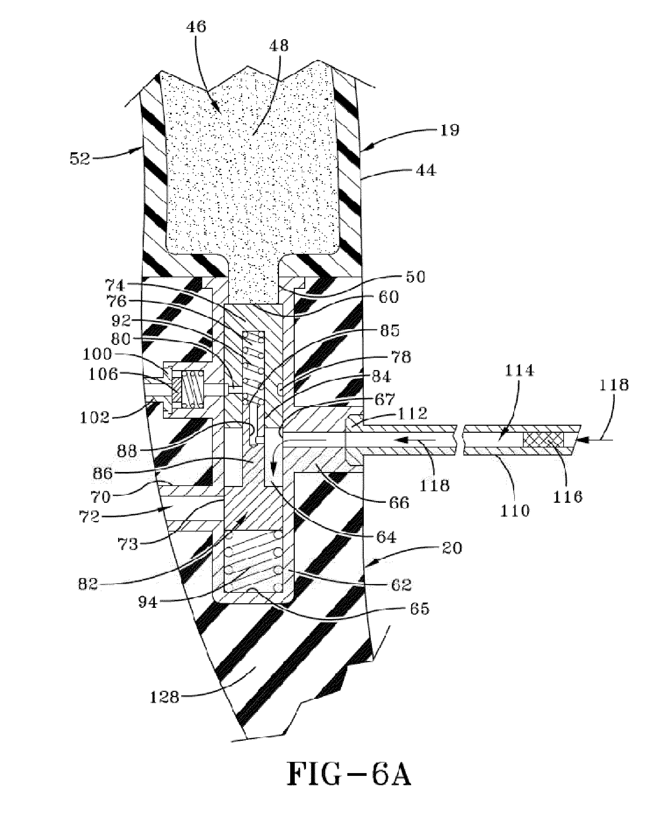

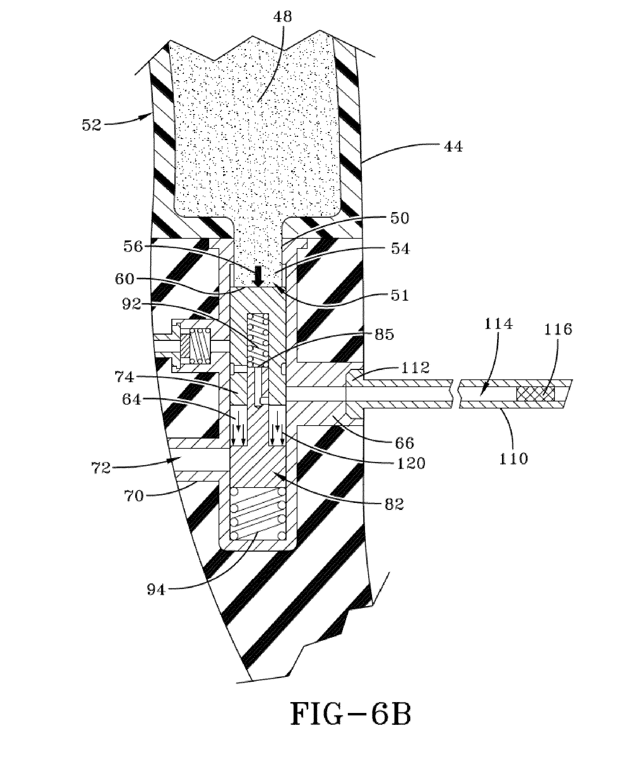

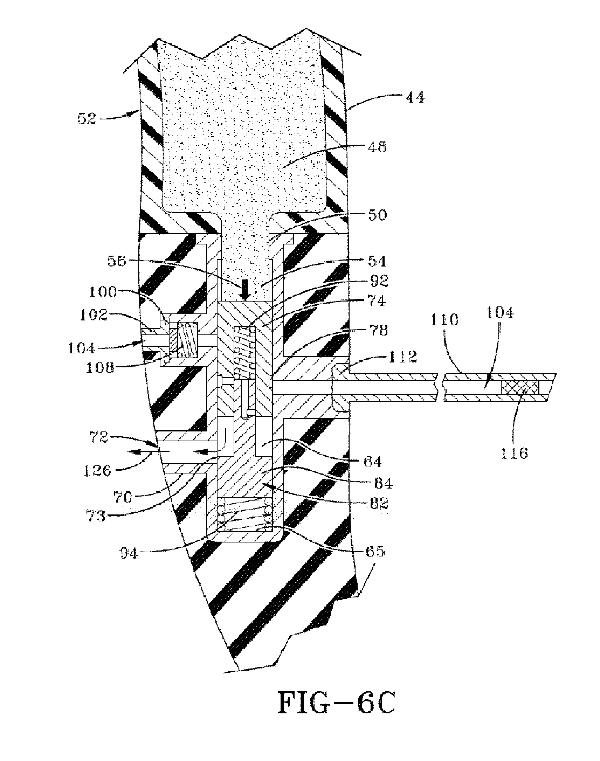

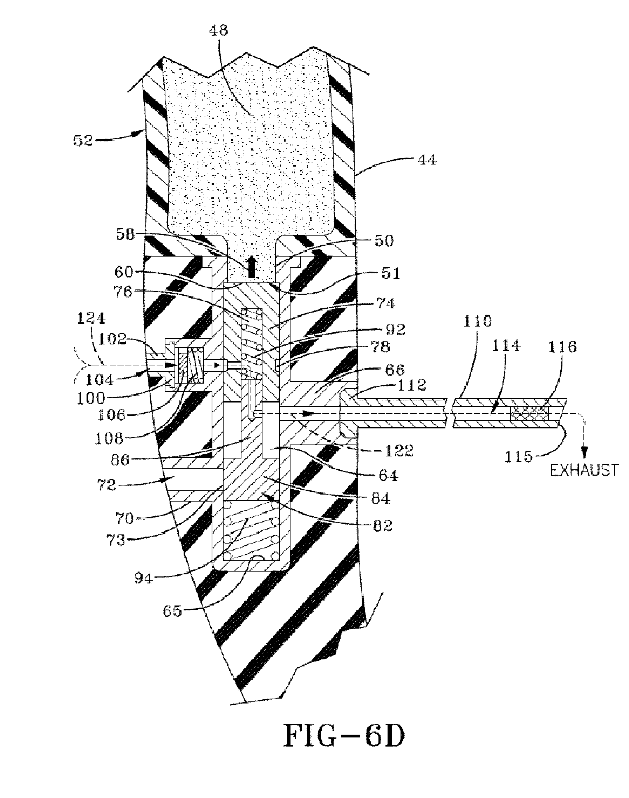

Positioned as shown in FIGS. 2A, 2B, 4, 5, the containment body 44 is subjected to bending forces from the tire sidewall 14 as the region of the sidewall to which body 44 attaches passes proximate or adjacent to the tire footprint 38 and is compressed by forces 36 on the tread 18 (FIGS. 3B, 5). Bending forces 36 applied to bend the sidewall region 14 causes a commensurate bending deformation 52 of the medium containment body 44, as shown in FIGS. 6A, 6B, 6C and 6D. The deformation 52 introduced into the body 44 by the bending tire sidewall 14 proximate to the tire footprint 38 causes displacement of a quantity 54 of the medium 48 along the outlet conduit 50 in the direction shown by arrow 56 of FIG. 6B. Pressure from the displaced medium quantity 54 acts as a pressure actuator to the pumping assembly 20 as will be explained below. When the tire sidewall region to which body 44 attaches leaves a proximal position to the tire footprint 38, such as the position opposite the tire footprint as depicted in FIG. 6A, the compression force on the sidewall is removed/lessoned/mitigated, causing a commensurate removal/lessoning/mitigating of bending force to the containment body 44. Removal of bending force on the containment body 44 causes the body 44 to resume its original, non-deformed state, as shown in FIG. 4, and the medium 48 may recede within the conduit 50 in the direction indicated at arrow 58. The cycle of sidewall bending and unbending translates into a cyclic deformation/restoration of the containment body 44 as the tire 12 rotates in either a forward 40 or reverse direction and generates a cyclic compression force from displaced medium volume 54 along the conduit 50. The compression force from the displaced medium quantity 54 may act in the direction 56 and may be proportionate to the pressure generated by the displaced quantity of the non-compressible medium 48.

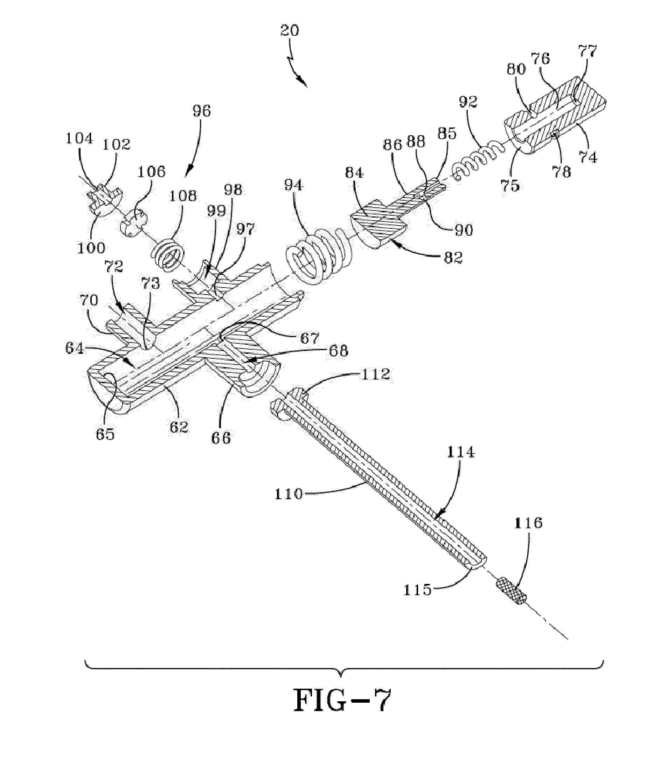

Referring to FIGS. 6A-D and 7, the pump assembly 20 is affixed to the tire carcass 12 at a location adjacent the compression actuating assembly 19, such as in an inward radial direction relative to assembly. The pumping assembly 20 includes a hollow compressor body 62, generally tubular in form, having an internal axially oriented air chamber 64 which extends to a lower chamber end 65. The air chamber 64 may be accessible through an inlet conduit 66 which intersects the air chamber 64 at an inlet opening 67. The body 62 and conduit 66 may be formed of a rigid material such as metal or plastic. The conduit 66 may be elongated and tubular with an internal axial passageway 68 communicating with the air chamber 64 via the inlet opening 67. On the opposite side of the body 62, a generally tubular outlet conduit 70 forms an axial passageway 72 extending therethrough and communicating with the air chamber 64 at the outlet opening 73. The inlet conduit 66 and the outlet conduit 70 may be axially offset, with the conduit 66 closest to the actuating assembly 19 and the conduit 70 farthest away from assembly 19.

A first cylindrical piston member 74 is sized for sliding position within an upper end of the axial air chamber 64 of the compressor body 62 and may include a blind axial bore 76 extending into an inward piston end surface 75. A recess 78 extends through an outward facing piston side and may function as a collector for the air which will come out of a valve assembly 96. The recess 78 connects the valve and the canal inside the piston, whichever the angular position of the piston. Extending into a piston side opposite the recess 78 may be a relief valve intake channel 80 that communicates with the blind bore 76.

A second cylindrical piston member 82 is sized for sliding receipt within a lower end of the axial air chamber 64 of the compressor body 62. The second piston 82 includes a cylindrical body 84 and an outward spring-compressing post arm 86 extending from the cylindrical body to an outward end 85. A blind bore 88 may extend into the end surface 85 of the post arm. A transversely oriented inlet channel 90 may extend through a side of the post arm 86 to communicate with the blind bore 88. A large coil spring 94 is sized to fit within the lower end 65 of the air chamber 64 within the compressor body 62. A smaller coil spring 92 seats against surface 77 within the blind bore 76 of the first piston 74. A pressure regulating relief valve assembly 96 mounts within an inlet chamber 99 of an inlet tubular sleeve 98 extending from the compressor body 62. The sleeve 98 includes an inlet axial passageway 97 extending from the chamber 99 to the air channel 64 of the compressor body 62. The assembly 96 includes a circular body 100 having a tubular entry conduit 102 extending outwardly. A throughbore 104 may extend through the conduit 102 and body 100. A disk-shaped seal component 106 is positioned within the chamber 99 inward of the circular body 100 and may be outwardly biased against the circular body 100 by a coil spring 108 seated within the chamber 99.

An inlet tube 110 is disposed at the opposite side of the compressor body 62 and affixed to the inlet conduit 66. The inlet tube 110 may have an annular abutment flange 112 at an inward end and an axial passageway 114 extending from an outward tube end 115 through the inlet tube to the inlet opening 67 of the compressor body 62. A porous filter component 116 may be seated within the tube passageway 114 proximate the outward tube end 115. The porous filter component 116 prevents particulates from entering the tube passageway 114. The pumping assembly 20 may be enclosed within an outer sheath or casement 128 that is shaped to complement a radially lower region of the sidewall 14 and may extend from the compression actuating body 44 to a location opposite to a tire bead region 16. The casement 128 may be formed from a protective material suitable for attachment to the tire innerliner, for example by a rubber matrix.

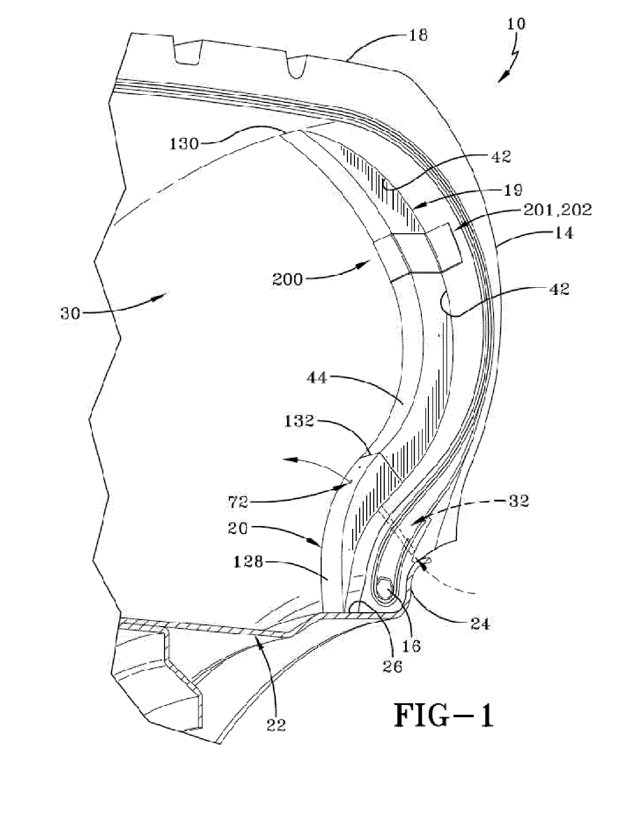

With respect to FIGS. 4, 5, 6A, and 7, the compression actuation assembly 19 and the pump assembly 20 may be connected together as shown for incorporation into the tire carcass 12. The actuation assembly 19 is incorporated into a region of the sidewall 14 of the tire carcass 12 that experiences a high bending load as the tire rotates. The assembly 19 may either be incorporated within the sidewall 14 or affixed to the sidewall 14, for example by adhesive. In the externally mounted assembly approach shown (FIG. 1), the containment body 44 may be complementarily shaped and curved as the sidewall region to which it attaches and extends generally from a radially outward end 130 proximate the tread region 18 radially inward along the sidewall attachment region to a radially inward end 132 proximate the bead region 16. The pumping assembly 20 may attach to the inward end 132 of the assembly 19 by adhesive.

Alternatively, the pumping assembly 20 may be sheathed within an outer casing 128 composed of a tire compatible material such as rubber. The coupled compression actuation assembly 19 and pumping assembly 20 may mount by adhesive attachment to the inner liner 28 of the tire carcass 12 with the assembly 20 proximate to the carcass bead/lower sidewall region 32. So positioned, the inlet tube 110 to the pumping assembly 20 may project in an axial direction through the tire sidewall 14 to an external air-accessible outer tire sidewall location. The tube 110 may be positioned above the rim flange 24 so that the rim flange may not interfere with intake air entering the tube 110.

The outlet conduit 50 of the compression assembly 19 may be secured to the upper end of the compressor body 62 as the outlet conduit 50 of actuator body 44 is received in sealing engagement with the upper end of the compressor body. The compressor body 44 may abut the outer casing 128 containing the pumping assembly 20. The assemblies 19, 20, now attached to each other, may be attached to a region of the tire sidewall 14 as shown in FIGS. 2A, 4. The first and second pistons 74, 82 may be mechanically coupled as the post projection 86 from the second piston 82 projects into the bore 76 and against the spring 92, seated within bore. Axial movement of the pistons 74, 82 may thus be synchronous within the air chamber 44 in both radial directions.

FIGS. 6A-D depict an example of the sequential operation of the pump assembly 20 and compression actuator assembly 19. FIG. 6A shows the pump assembly 20 with the pistons 74, 82 in "at rest" positions. This "at rest" position correlates with a position of the assemblies 19, 20 mounted to a rolling tire 12 as shown in FIG. 3A at a rotational position opposite to the tire footprint 38. The sidewall area 14 that supports the assemblies 19, 20 when opposite the tire footprint 38 (FIG. 6A) is not flexed or bent from the tire contact with the ground surface 34. Accordingly, the compression actuator body 44 may have a bending deformation 52 that generally correlates with the curvature of the unbent sidewall 14. The medium 48 enclosed within the body 44 may be generally "at rest" and contact the leading medium surface 60 within the conduit 50 against the end of piston 74. The outer piston 74 may be retracted toward the outer end of the air chamber 64 under spring bias from the coil spring 92.

In the "at rest" position of FIG. 6A, the piston 74 may be axially above the intake opening 67 of the inlet conduit 66. As a result, air from outside of the tire 12 may be admitted through the filter 116 and into the bore 114 of the inlet conduit 110 from which it may move through the opening 67 of the inlet conduit 66 and into the air chamber 64. Arrows 118 show a path of inlet air travel. The piston 82 may be in an axially raised position within the air chamber 64 and block off the outlet opening 73 of the outlet conduit 70. Springs 92, 94 may be in respective uncompressed conditions. The relief valve assembly 96 may be generally in a closed position so long as the pressure within the tire cavity 30 remains below a preset recommended inflation pressure. In the closed position, the spring 108 may bias the stop disk head 106 against the opening 102 through conduit body 100. Should the pressure within the tire cavity 30 exceed a pressure threshold, the air pressure from the cavity may force the stop 106 away from the conduit opening 102 and allow air to escape to atmosphere from the tire cavity.

As the region of the sidewall 14 carrying the assemblies 19, 20 rotates into a position adjacent the tire footprint 38, the sidewall 14 may flex and bend, causing a commensurate flexing or bending of the compression actuator body 44 as shown at numeral 52 of FIG. 6B. FIG. 6B shows that the viscoelastic material 48, having non-compressible material properties, in response to the bending of body 44 is forced lower within the outlet conduit 50 and exerts a downward pressure on the first piston 74 as indicated by arrow 56. The leading end surface 60 of the medium 48 may bear against the outward surface of the piston 74 and overcome the resistance of coil spring 92 by compression of spring to allow the piston to move lower into the air chamber 64. In so doing, the piston 74 may move into a position blocking air intake into the chamber 64 through the intake tube 110 and may compress the volume of air within the chamber 64. Increased pressure of air within the chamber 64 may force the second piston 82 lower within the air chamber and compress the coil spring 94.

When the piston 82 has moved a sufficient axial distance within the air chamber 64, the outlet opening 73 into the outlet conduit channel 72 may cease to be obstructed by the piston 82, as shown in FIG. 6C and FIG. 5. Pressurized air from the chamber 64 may thus be forced through the channel 72 and into the tire cavity 30 in the direction indicated by arrow 126. When the pumping of air is complete, and pressure within chamber 64 against the second piston 82 is discontinued, the piston 82 may be forced axially upward and back into the "at-rest" position shown both in FIG. 6D and FIG. 6A.

As seen from FIG. 6D, once removal of the quantity of pressurized air within the chamber 44 into the tire cavity 30 is complete, with further rotation of the tire 12, the assemblies 19, 20 with the attachment region of sidewall 14 leave the high stress position adjacent the tire footprint 38 and the tire sidewall region resumes an unstressed curvature as shown in FIG. 2A and 3A. The return of the sidewall 14 to an original curvature configuration outside of the tire footprint 38 may be accompanied by, and synchronous with, a return of the actuator body 44 to an unbent configuration. As the actuator body 44 resumes its original curvature, and commensurate with the end of the pumping cycle of air from the air chamber 64, the piston 82 may move axially upward under the influence of spring 94, which forces the piston 74 in a radially upward direction. The viscoelastic medium 48 may recede into the original containment form of the body 44 and the pumping of air into the tire cavity 30 may be discontinued until the assemblies 19, 20 rotate with the tire 12 back into alignment adjacent the tire footprint 38. With each revolution, the pumping of air from the chamber 64 into the tire cavity 30 may occur in this cyclic fashion. It will be appreciated that the operation of the air pumping action may be independent of the direction of tire revolution and will occur with either a forward or reverse tire travel.

FIG. 6D also depicts view of the pump assembly 20 wherein the pistons 74, 82 are in the "at-rest" position while the relief valve assembly 96 functions to vent tire cavity over-pressure air to the atmosphere. The relief valve assembly 96 may be generally in the closed position shown in FIGS. 6A - 6C and opening when the air pressure within the tire cavity 30 exceeds a recommended upper threshold. In such an event, the stop body 106 may be forced laterally out of sealing engagement against the conduit flange 100 and overcome biased resistance from the coil spring 108. The passageway 104 may thus be opened to allow over-pressure air from the tire cavity 30 through the conduit 102 and the relief channel 80 within piston 74 as indicated by directional arrow 124. The pressurized air may follow a path through the blind bore 76 of the piston 74, through the blind bore 88 within the coupling post 86 of the piston 82, and into the bore 114 of the tube 110, as indicated by directional arrow 122. The expelled over-pressure air exhausts to the atmosphere through the filter unit 116 and out of the tube end 115. The exhaust of air through filter unit 116 may clean particulates from the filter as well as correct the over-pressure within the tire cavity 30. Once the tire cavity pressure is reduced below the threshold recommended pressure, the spring 108 may uncoil and pressure the stop body 106 against the conduit flange end 100 thus closing off the tire cavity 30 until over-pressure exhausting of air from the tire cavity is necessary.

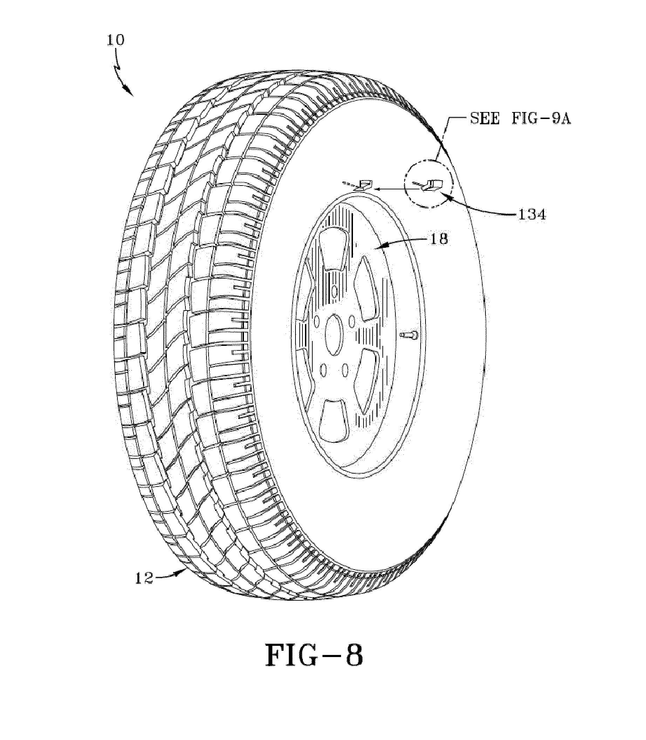

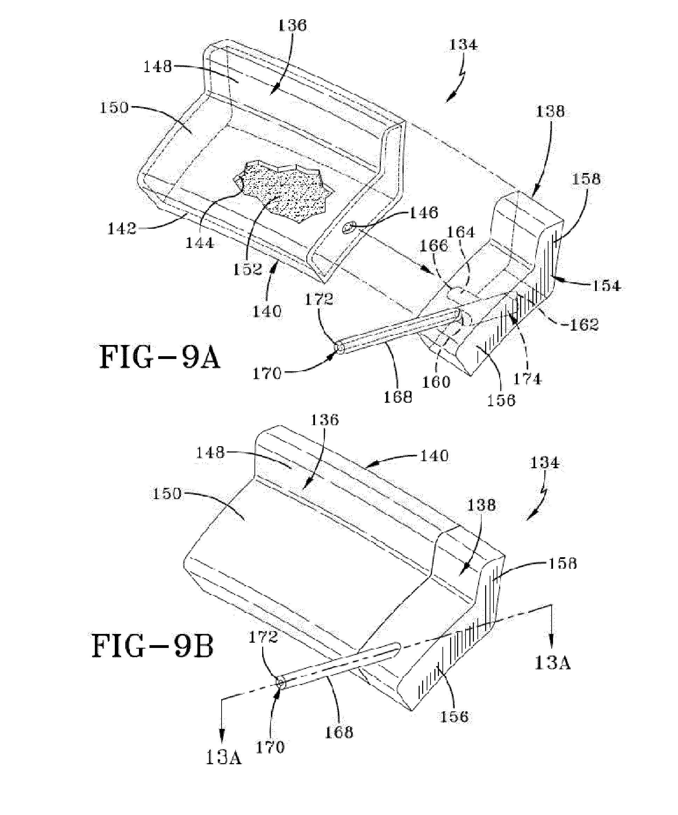

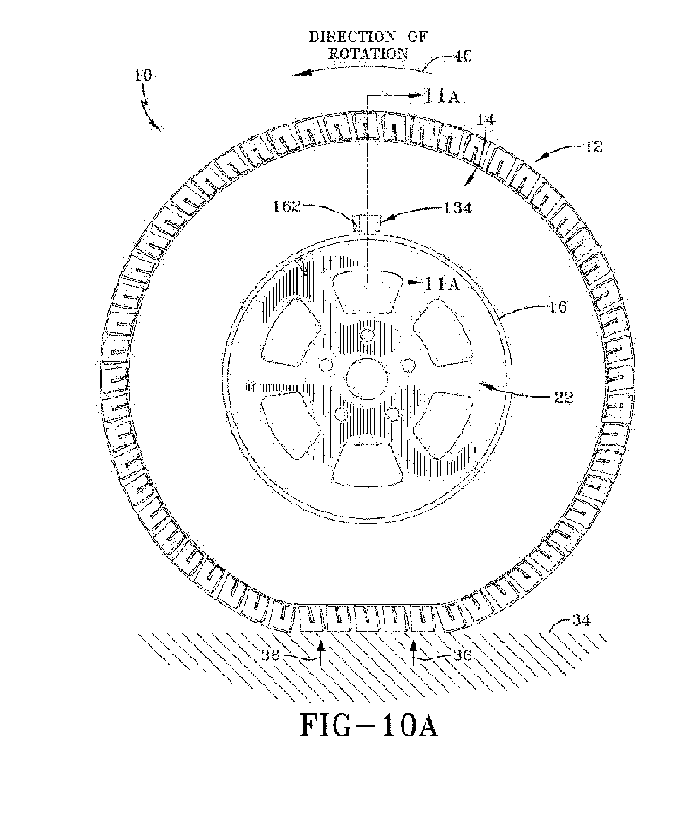

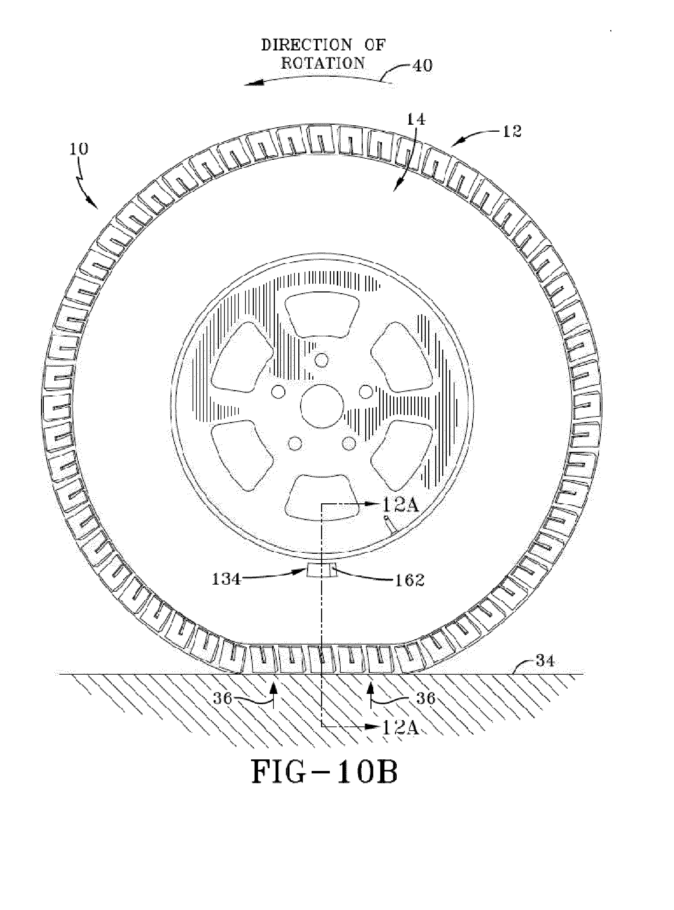

Referring to FIGS. 8, 9A, 9B, 10A, 10B, 11A, 11B, 12A, 12B, 13A - 13D, 14A - 14C, inclusive, another example of a pump and compression actuating assembly 134 is shown including a compression actuating assembly 136 coupled to a pump assembly 138 to form an L-shaped insert body 140. The body 140 may mount to a lower sidewall region of a tire carcass 12 proximate to a bead region 16, as shown in FIGS. 10A, 10B. The compression actuating assembly 136 may have a deformable hollow body 142 forming a containment chamber 144 communicating with an outlet portal 146. The hollow body 142 may be configured at ninety degrees into an L-shape having an upright body portion 148 extending from a horizontal body portion 150. A viscoelastic medium of non-compressible material 152 may fill the containment chamber 144 as previously described in reference to the first example.

The pump assembly 138 may likewise form an L-shaped encapsulation sheath body 154 affixed to the L-shaped compression actuating body 142. The body 154 may include an upright body portion 158 extending from a horizontal body portion 156. An outlet orifice 160 may be positioned within the horizontal portion 156 and an inlet orifice 162 in a side facing region of the horizontal body portion 156. An outlet conduit 168 may be attached to the outlet orifice 160 and may include an axial passage 170 extending to a remote end 170.

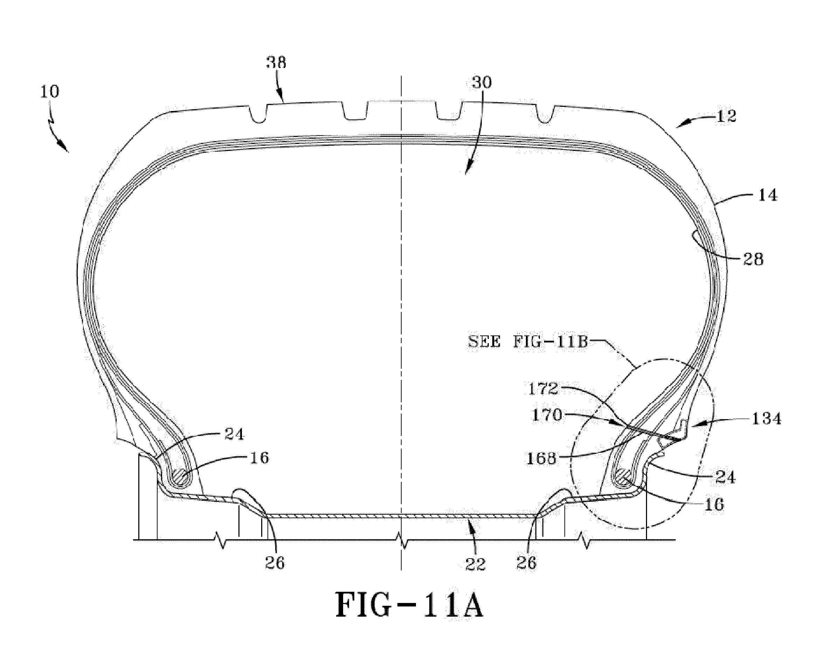

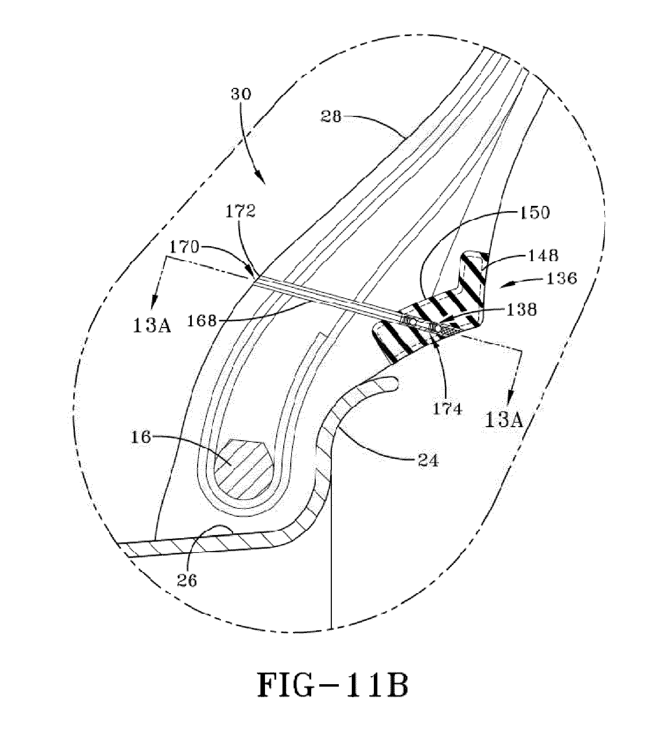

FIGS. 10A and 10B show the mounting of the L-shaped pump assembly 134 to a tire 12 at a lower sidewall region proximate to a tire bead locationl 6. As with the example previously described, the pump assembly 134 may rotate with the tire 12 from a location outside proximity of the tire footprint 38 (FIG. 10A) into a position adjacent the tire footprint (FIG. 10B) with each tire revolution. As with the first example, the body 140 may be bent by stress induced from a bending of the tire sidewall 14 as the rotational position of the assembly 134 aligns adjacent the tire footprint 38 (FIG. 10B). FIGS. 11A & 11B show the relative position of the assembly 134 within the lower region of the sidewall 14 where the body 140 is subjected to high bending forces as the tire 12 rotates. The outlet end 172 of the outlet conduit 168 may extend through the tire wall to the tire cavity 30 of the tire 12. Compressed air from the compressor body 174 may travel along a passage 170 and into the tire cavity 30 to keep the inflation pressure of the tire 12 at a desired level.

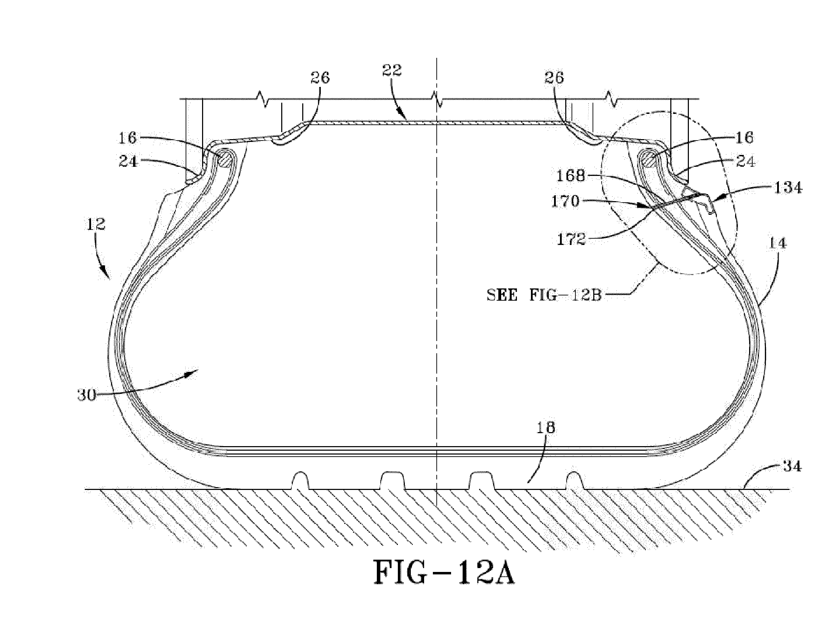

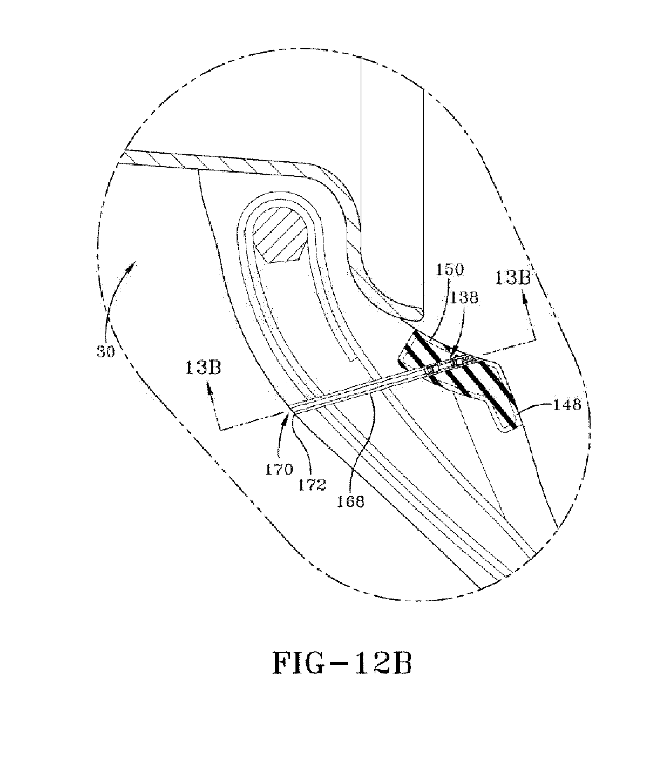

FIG. 11A is a sectioned view taken from a pump location in a non-compressed area of the tire 12, as shown in FIG. 10A. FIG. 11B is an enlarged view of the pump assembly 134 of FIG. 11A. FIG. 12A is a sectioned view taken from a pump location in a compressed area of the tire 12, as shown in FIG. 10B. FIG. 12B is an enlarged view of the pump assembly 134 as depicted in FIG. 12.

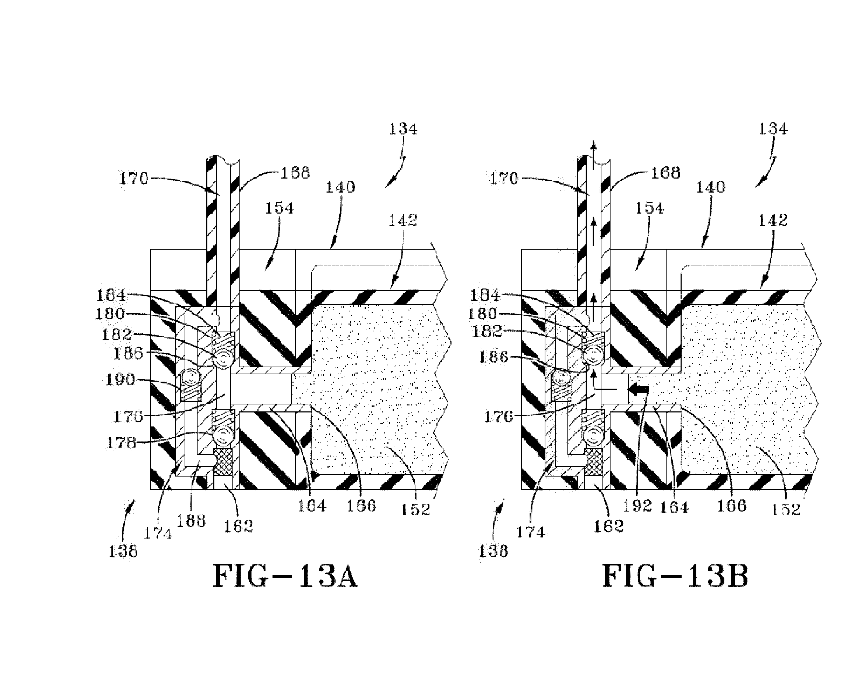

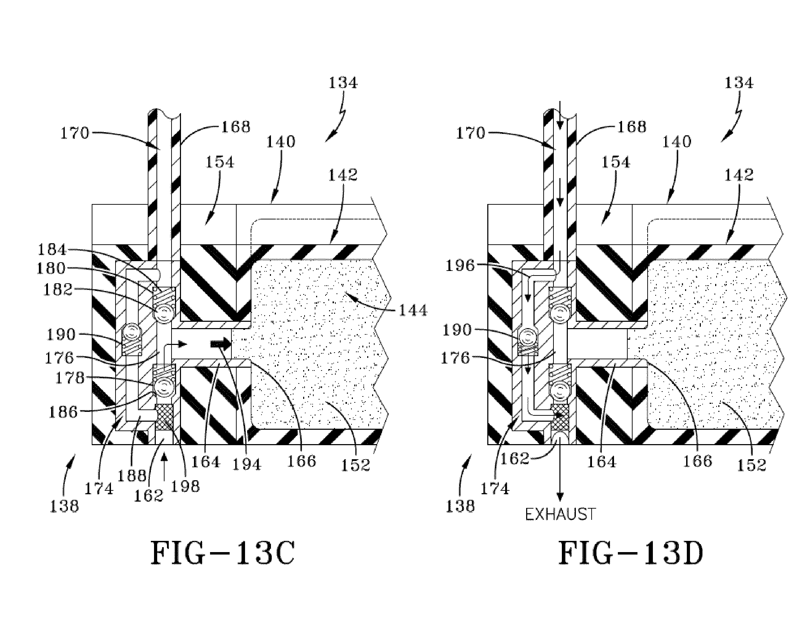

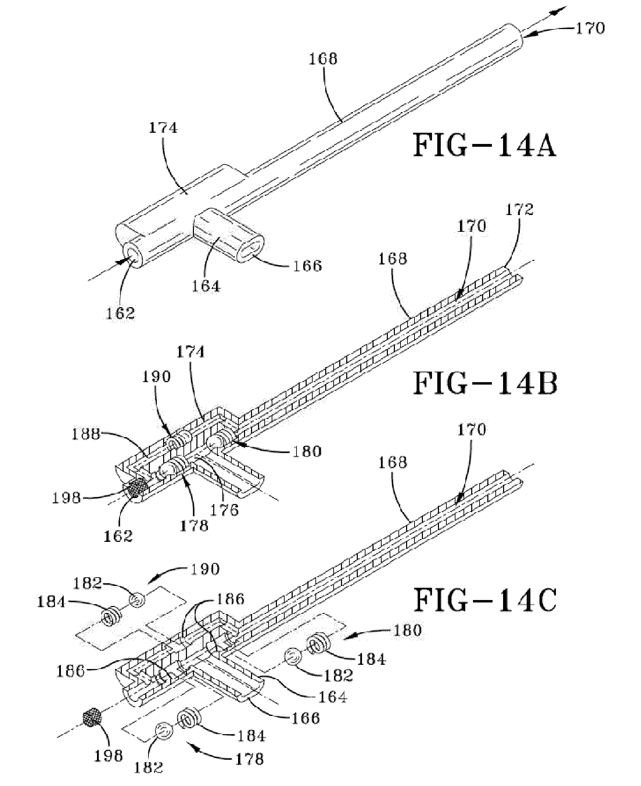

With reference to FIGS. 13A - 13D and 14A - 14C, the compression body 174 may have an internal elongate compression chamber 176 and a pair of one-way ball valves 178, 180 positioned at opposite ends of the chamber 176. Each of the valves 178, 180 may include a stop ball component 182 biased by a coil spring against a seat 186. In addition, a relief pressure by-pass passage 188 may be provided within the compression body 174 in parallel to the chamber 176. Seated within the passage 188 may be a one-way ball valve 190 of similar configuration as the ball valves 178, 180. The passageway 188 and the chamber 176 may extend in parallel between the outlet conduit 168 at one end of the compression body 174 and the inlet opening 162 at an opposite end.

Operation of the pumping assembly 138 may proceed, as follows. The L-shaped body 136 may be embedded or affixed to the tire carcass 12 in the position shown generally by FIGS. 10A & 10B. So positioned, as the tire sidewall 14 to which the assembly 138 undergoes bending, the compression actuating body 142 may likewise undergo bending. FIGS. 13A - 13D show the pump assembly 138 in an "at-rest" status; that is, with the assembly 138 not under bending stress as the tire position of FIG. 10A represents. The ball valves 178, 180 may be in a seated closed position. The ball valves 178, 180 may be selected to open at a desired threshold pressure, as will be explained below.

In the "at-rest" position, air within the compression chamber 176 may be unpressurized. The relief valve 190 may likewise be seated and closed, and will remain so, unless the air pressure within the tire cavity 30 is greater than a desired pressure threshold. In an over-pressure situation, the valve 190 may open and allow air to escape the tire cavity 30 through the passage 188 and exhaust from the inlet opening 162 to the atmosphere. The compression medium 152 may be confined to the compression body chamber 176 with the inlet conduit 164 being clear.

FIG. 12B & FIG. 13B show the pump assembly 134 when the tire 12 has rotated the assembly into a position adjacent the tire footprint 38 (FIG. 10B). The compression body 174 may thereby be subjected to a bending force and deformed. The bending of the body 174 may force the viscoelastic material 152 from the chamber 144 into and along the conduit 164 (direction 192) which, in turn, acts to compress air within the compression chamber 176. Pressure from the compressed air may open the valve 180 by unseating the valve ball 182 and air is channeled into the outlet conduit 168 to the tire cavity 30.

FIG. 13C represents the pump assembly 134 after further rotation of the tire 12 occurs, positioning the pump assembly away from the tire footprint 38 such as the position shown in FIG. 10A. The removal of bending force to the body 174 may allow the resilient body to return to its original configuration and the chamber 176 into a form allowing the medium 152 to recede back from the conduit 164. The transfer of pressurized air from the chamber 176 may draw air into the chamber 176 from the atmosphere through the unseating of the one-way valve 178 from its seat 186. Air drawn into the chamber 176 may force the medium 152 back into the chamber 144, as shown at arrow 194. The valve 180 may have reseated itself and blocked off air from exiting the chamber 176. A filter member 198 within the inlet end of the chamber 176 may keep particulates from entering the chamber 176.

FIG. 14D shows the assembly 134 back into its original "at-rest" position. In the event that an over-pressure situation arises within the tire cavity 30, the tire air pressure will cause the one-way valve 190 to open and air to flow in direction 196 back through the passage 188 for exhaust through the filter 198 and into the atmosphere. The back flow of air through the filter 198 may keep the filter clean. As with the first example, the pump assembly 134 may operate in either direction of tire rotation and may pump air into the tire 12 during each cycle or tire revolution.

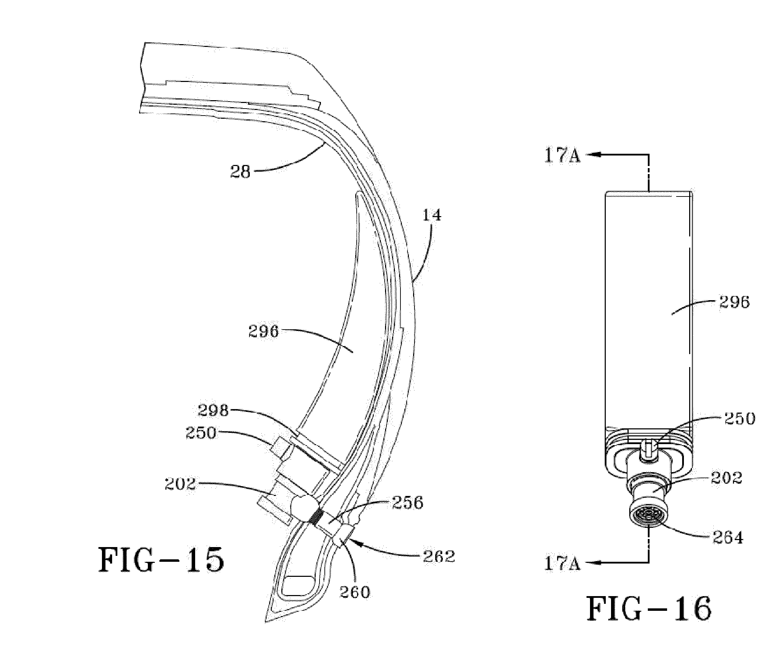

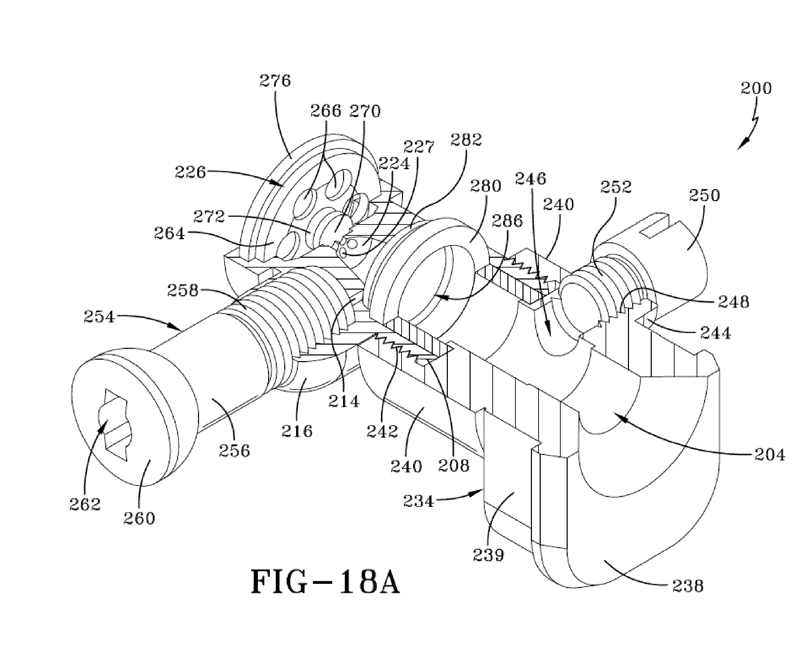

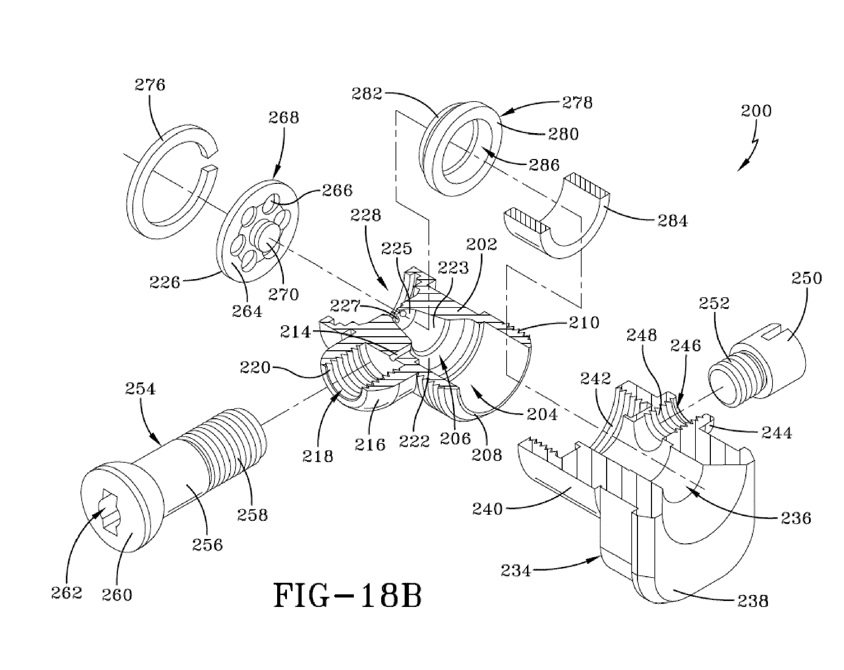

With reference to FIGS. 15, 16, 17A, B, 18A, and 18B, a tank-based hydraulic pump assembly 200 is shown. The assembly 200 may be functionally analogous to the examples of FIGS. 4 and 7, as previously discussed. The assembly 200 may include an air compressor body 202 having an elongate axial bore or chamber 204. The chamber 204 may be subdivided into a rearwardly located membrane chamber 206 at a rearward end 208 of the compressor body 202. The end 208 of the body 202 may have external screw threads 210 for assembly purposes. Adjacent to the rearward membrane chamber 206 may be a medial air compression chamber 212. Positioned at the chamber 212 may be a tubular inlet air channel 214 extending through a sidewall of the body 202 into communication with the chamber. An external inlet sleeve 216 may extend from the body 202 opposite the channel 214 and may enclose a throughbore 218. Assembly screw threads 220 may be positioned within the bore 218.

Separating the chambers 206, 212 along the bore 204 may be an annular membrane abutment shoulder 222. Adjacent to the chamber 212 at an opposite end along the bore 204 may be a concave chamber end wall 224. Inwardly tapering sidewalls 223 may define the chamber 212 and extend from the annular abutment shoulder 222 to the end wall 224. A circumferential array of through apertures 227 may be positioned within the concave end wall 224. A circular outlet stop assembly 226 may seat within the body 202 on the opposite side of the concave end wall 224. A pair of annular detent channels 230, 232 may be formed within an outlet bore 228 at an end 231 of the compressor body 202. The outlet stop assembly 226 may seat within the forwardmost channel 230 in position adjacent the compression chamber end wall 224.

A head cap member 234 having an axial internal chamber 236 may attach to the end 208 of the body 202. The cap member 234 may include an outer flange 238 and an annular detent channel 239 adjacent the outer flange. The cap member 234 may have a cylindrical body portion 240 that is internally threaded with screw threads 242. Extending through a sidewall of the cap member 234 may be a fill conduit 244 having a throughbore 246 and internal screw threads 248. A screw member 250 may include threads 252 that screw into the fill conduit 244.

An inlet conduit 254 may have a cylindrical body 256 and an end 258 that threads into the inlet sleeve 216. An enlarged head 260 may be integrally joined to the body 256 and a throughbore 262 may extend axially through the inlet conduit 254 end to end. The outlet stop member 226 may include a circular snap-ring body 264 dimensioned for close receipt within the outlet bore 228 and formed of suitably rigid material, such as plastic. The snap-ring body 264 may be frictionally inserted and seat within the annular detent channel 230. The body 264 may have a circular array of spaced apart apertures 266 extending therethrough and a slideably mounted central plug member 268 disposed within a center aperture of the body 264. The plug member 268 may have a body 272 including an enlarged circular sealing disk at a forward end positioned opposite to the apertures 227 within the concave end wall 224 of the air compression chamber 212. The body 272 may reside within the center aperture of the snap-ring body 264. An annular flared spring flange portion 274 may be formed at the rear of the body 272. The plug member 268 may be formed from a sufficiently resilient elastomeric material such as plastic so as to be compressible in an axial direction within the center aperture of snap-ring body 264. Accordingly, the plug member 268 in the uncompressed state may position the sealing disk 270 in sealing engagement against the apertures 227. Under air pressure, the sealing disk 270 may move rearward into an "open" position wherein the apertures 227 are unobstructed. Movement of the plug member 268 between the uncompressed "closed" position and the compressed "open" position may be controlled by air pressure within the compression chamber 212, as explained below.

A circular retaining spring clip 276 may be positioned within the detent channel 232 and may hold the outlet stop member 226 within its respective channel 230. An elastomeric membrane component 278 may have a generally circular disk-shape. The component 278 may have an annular ring body 280 which circumscribes a central circular flexible membrane panel 282. The ring body 280 of the membrane component 278 may have a sufficiently rigid material composition such as rubber for retaining its form while the membrane panel 282 is sufficiently thin and resiliently flexible to move between a bulging configuration and a non-bulging configuration. Thus, the membrane panel 282 may be operatively capable of bulging outward under rearward air pressure and sufficiently resilient to revert back to an original orientation when such pressure is removed.

The membrane component 278 may be seated within the membrane chamber 206 of the compressor body 202 against an internal annular shoulder 283. An annular retention collar 284 may be positioned within the chamber 206 behind the membrane component 278. The head cap 234 may be assembled by screw thread engagement to the rear of the compressor body 202 as shown. In the assembled condition, the axial compression chamber 206, a central bore chamber 286 of the membrane component 278, and the axial chamber 236 of the head cap 234 may be in co-axial alignment.

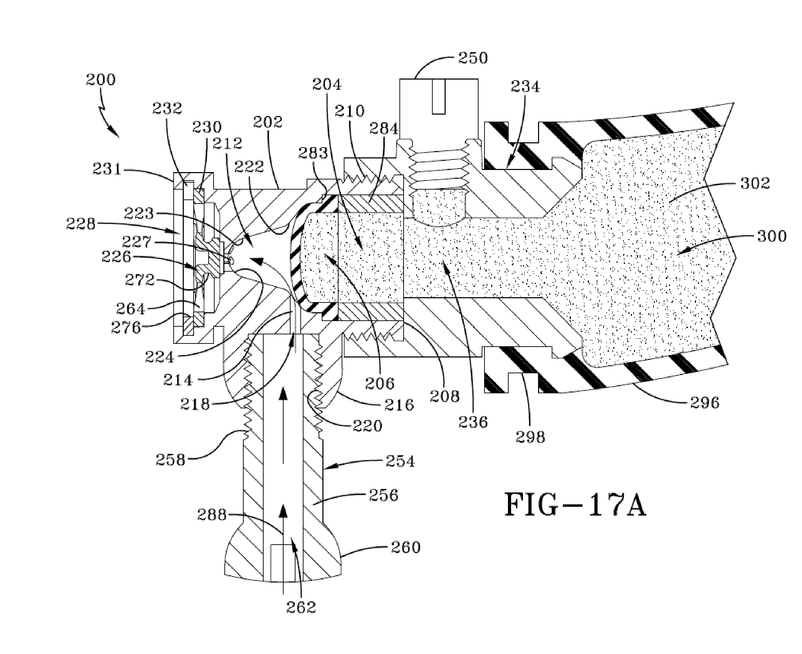

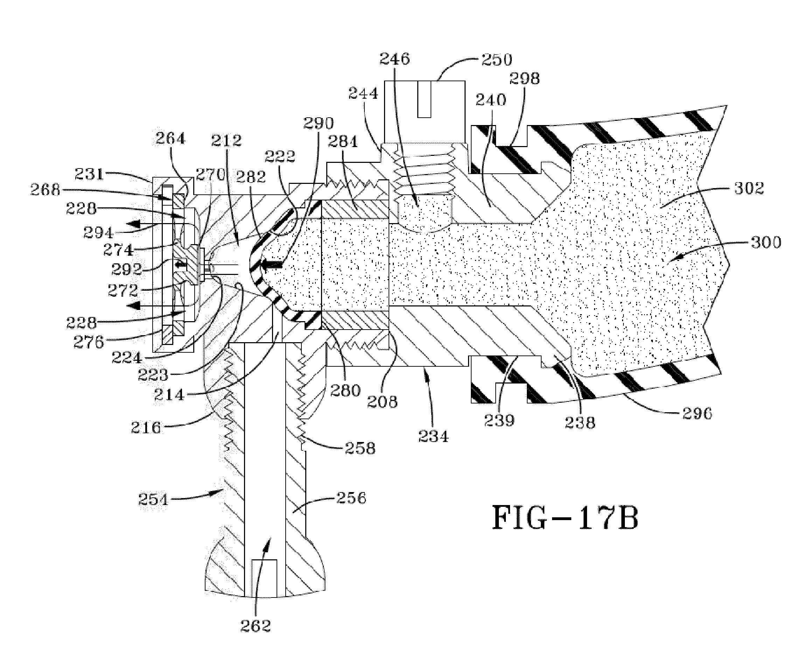

As with the previously discussed example of FIGS. 2A & 7, the tank-based pump assembly 200 of FIGS. 17A & 17B may attach to an actuator tank or compression actuating body 296 by means of a forward coupling rib 298 which engages the detent channel 239 of the head cap component 234. The compression actuating body 296 may contain an internal reservoir 300 filled with a non-compressible medium 302, such as an anti-freeze and water mixture. The forward outlet of the actuating body 296 thus may be in medium fluid-flow communication with the internal chamber 236 of the head component 282 and the internal axial membrane chamber 206.

FIGS. 15, 17A, 17B, 18A illustrate the pump assembly 200 in the assembled condition with the inlet tube 254 screw assembled with the inlet sleeve 216 of the body 202; the outlet stop member 226 positioned within the outlet bore 228 against the apertures within the end wall 224 of the chamber 212; and the retainer clip 276 in a retention position within the outlet bore 228. The compression actuating body or tank 296 may be attached to the rearward end of the head cap 234 and filled with the medium 302 via fill port 244 after the screw member 250 is removed. The screw member 250 may then be reinserted into the fill port 244 to encapsulate the medium 302 within the reservoir 300. In containment, the medium 302 may fill the head cap member chamber 236 and abut a rearward surface of the membrane panel 282.

The assembly 200 with the compression actuating body 296 may be affixed to the innerliner 28 of a tire 12, as shown in FIG. 15. The inlet tube 254 may extend through the tire sidewall 14 and present the outer end of the throughbore 262 to the external atmosphere. The outlet bore 228 may exit into the tire cavity 30 to direct replenishment air into the cavity as required.

FIG. 17A shows the pump assembly 200 in an "at-rest" condition, with outside air entering the inlet chamber 262, as indicated by arrows 288. The membrane or diaphragm panel 282 of the membrane body 280 may be in an "at-rest", non-extended state in which the medium 302, behind the membrane panel 282, may exert only a nominal pressure against the panel. So positioned, the membrane panel 282 may not block air from the inlet channel 214 into the compression chamber 212. In the "at-rest" position of FIG. 17A, air within the chamber 212 may be in a non-compressed state. The sealing disk 270 of the plug member 268 may be positioned against the concave end wall 224 of the air compression chamber 212 and, so positioned, obstruct air from exiting the chamber 212 through the apertures 227. Air may thus be contained in a non-compressed state within the chamber 212. In the "at-rest" condition, accordingly, the pump assembly 200 may not be pumping air into the tire cavity 30.

FIG. 17B is a view subsequent to FIG. 17A, wherein a deformation of the compression actuating body 296 may act to displace a quantity of the viscoelastic medium 302 under pressure through the cap member chamber 236, the retention collar bore 204, and against a rearward surface of the membrane panel 282. The applied pressure from the displaced medium 302 against the panel 282 may force the panel outward into a protruding or bulging condition, as indicated by arrow 290. As a result, the air within the compression chamber 212 is compressed. Increased air pressure within the compression chamber 212 may force the sealing disk 270 of the plug member 268 outward, compressing the plug member 268 against the support members 274. Movement of the sealing disk 270 into the open position may serve to uncover the apertures 227 and allow air to pass from the chamber 212, through the apertures 266 of the snap-ring 264, through the outlet bore 228, and into the tire cavity 30. It will further be noted that the bulging protrusion of the membrane panel 282 may further act to block off the inlet channel 214 during the pumping cycle operation.

When the air pressure within the compression chamber 212 has diminished, the compression of plug member 268 may release and force the sealing disk 270 back into the "sealing" or "closed" position of FIG. 17A. The membrane panel 282 may resume the configuration of FIG. 17A as the medium 302 behind the panel recedes back into its containment reservoir 300 and the compression actuating containment body 296 resumes its non-deformed configuration. Movement of the membrane panel 282 back into a "non-protruding" configuration may open the inlet channel 214, thus allowing outside air to be admitted into the compression chamber 212. The cyclical intake of air, compression of air, and exhausting of compressed air into the tire cavity 30 may occur with every tire revolution.

It will be appreciated that the disk 270 may be formed of plastic and have a minimal travel to open, such as, but not limited to, 0.254 mm to 0.508 mm. When assembled to the snap-ring 264, the disk 270 may force the seal end against the openings 227 in the compression chamber end. The six holes 266 through the snap-ring 264 may move a large amount of air from the compression chamber 212 to the tire cavity 30 during relatively fast tire rotation.

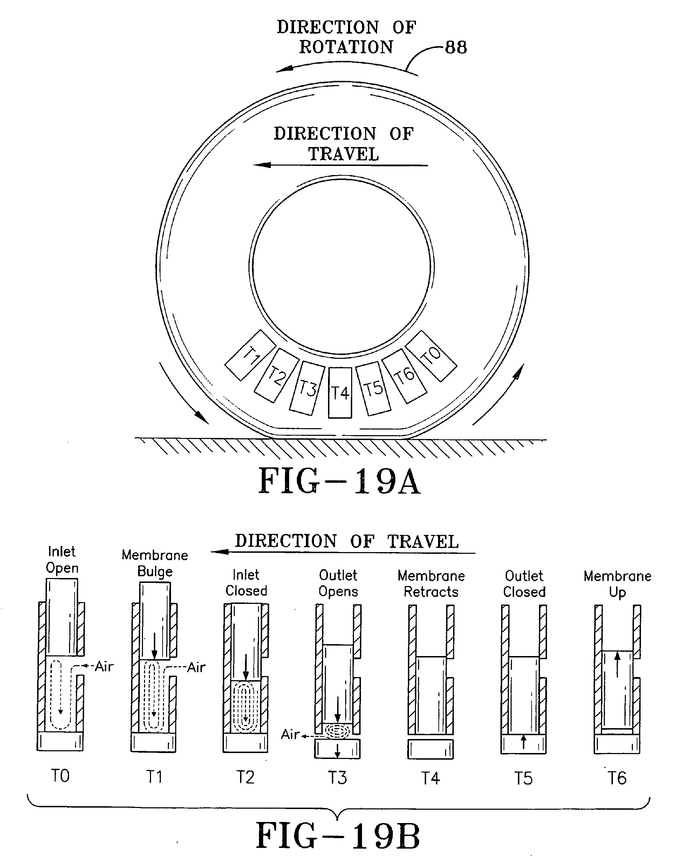

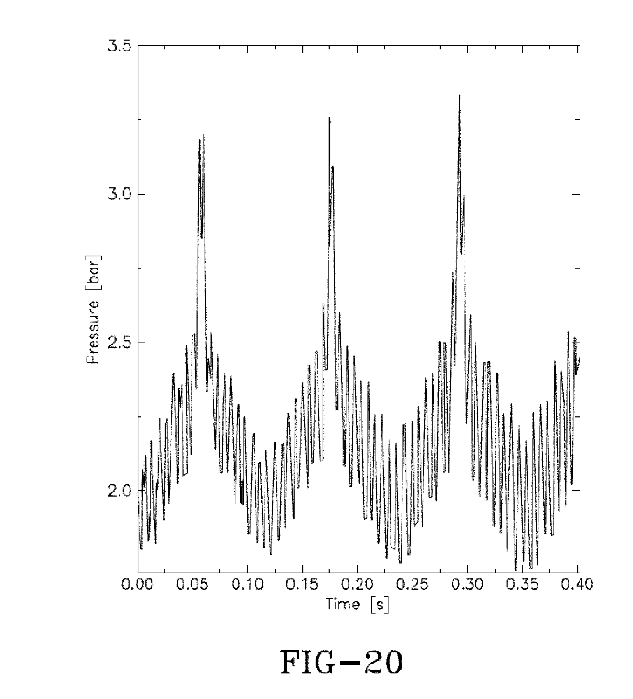

FIGS. 17A, 17B, 19A and 19B show the operational cycle of the pump assembly 200 as a tire 12 rotates against a road surface. The flexing of the tire sidewall 14 ma cause a deformation of the compression actuating body 286 entering a position adjacent the tire footprint 38. T0-T6 shows a position of the pump entering and leaving the footprint vicinity. FIG. 19B shows the operation/location of the membrane panel 282 at each of the stages T0-T6. The pump assembly 200 may accordingly cyclically and alternatingly close and open inlet and outlet ports to effect pressurized air replenishment of the tire 12 during rotational operation of the tire. FIG. 20 shows in graphic form cyclical pressure level variance within the air compression chamber 212 over time.

A mechanical device, such as the above described assemblies 19, 20, may be secured to the tire 12 in a post-cure operation (Fig. 1). Such an operation may require a flexible bonding method allowing operation under dynamic conditions. Items such as the assemblies 19, 20, and electronic sensors especially may require a flexible, yet secure attachment method since, not only the dynamic forces and motion of the tire 12, but also forces and motion generated by the assemblies 19, 20 and the sensor (e.g., heat buildup) themselves, may work against such attachment. Further, subsequent re-treading or repair operations may require de-bonding on demand in order to remove/exchange the assemblies 19, 20.

In accordance with the present invention, a hook-and-loop system 200 (also called "VELCRO"^{™} or "Klett-Verschluss"^{™}) may allow such attachment. On each side of the assemblies 19, 20, a first patch 201 may be bonded to the tire 12 by a co-vulcanization approach placing the patch on the unvulcanized tire prior to curing of the tire. Alternatively or additionally, elastic adhesives such as cold-vulcanizing rubber formulations may be used as well in a post-cure operation. The attachment in accordance with the present invention may also include mechanical fixation.

The system 200 may include the loops on the first patches 201 since the loops may stand up to a curing operation better than the hooks and the loops may be less likely to damage a curing bladder than the hooks. A corresponding counterpart second patch 202 may be secured to a mechanical device, such as the assemblies 19, 20 and sensors, by an adhesive, a multicomponent injection molding, mechanical fixation, etc. The second patch 202 may have hooks at its opposite ends for engaging the loops on the first patches 201. As shown in FIG. 1, when the patches 201, 202 are mated together, the system 200 thus provides great resistance to the tangential forces generated by the tire 12, assemblies 19, 20, and/or sensors while allowing removal by "peeling away" the second patches 202 from the first patches 201.

## Claims

1. An air-maintenance tire having:
a tire carcass (12) comprising a tire cavity (30) defined by a tire inner liner, first and second sidewalls (14) extending respectively from first and second tire bead regions (16) to a tire tread region (18);
compression actuator means (19) mounted to the tire carcass (12) configured for operative actuation by tire deformation during a tire revolution;
a pump assembly (20) affixed to the tire carcass (12) and comprising a compressor body affixed to the compression actuator means (19) and having an internal air chamber, the air chamber having an inlet opening for admitting air into the internal air chamber and an outlet opening for conducting air from the internal air chamber to the tire cavity (30); the air compressor body further comprising:
(i) a membrane valve member deforming into a deformed state within the internal air chamber responsive to actuation by the compression actuator means to compress air within the internal air chamber; or
(ii) a flexible membrane member located within the internal air chamber and operatively deforming within the internal air chamber responsive to contacting engagement with the compression actuator means between an open position relative to the inlet opening wherein permitting air flow from the inlet opening into the air chamber and a closed position relative to the inlet opening wherein obstructing air flow from the inlet opening into the air chamber, wherein the membrane member during operational deformation between the open and closed positions compresses a volume of air within the air chamber;
the tire (10) further comprising a hook-and-loop system (200) for securing the compression actuator means (19) and the compressor body to the tire carcass (12).

2. The air-maintenance tire system as set forth in claim 1 wherein the hook-and-loop system (200) includes a first patch (201) with loops and a corresponding second patch (202) with hooks.

3. The air-maintenance tire system as set forth in claim 1 or 2 wherein the hook-and-loop system (200) includes a first patch (201) co-vulcanized with the tire carcass (12) and a second patch (202) secure to the compression actuator means (19) and the compressor body.

4. The air-maintenance tire system as set forth in at least one of the previous claims wherein the hook-and-loop system (200) includes a first patch (201) with loops secured to the tire carcass (12) and/or wherein the hook-and-loop system (200) includes a second patch (202) with hooks secured to the compression actuator means (19) and the compressor body.

5. The air-maintenance tire system as set forth in at last one of the previous claims wherein in option (i) the air compressor body comprises the membrane valve member and an outlet valve member located within and at opposite respective ends of the internal air chamber, the membrane valve member and the outlet valve member moving within the internal air chamber responsive to actuation by the compression actuator means between respective open and closed positions, whereby cyclically opening and closing the inlet and the outlet openings during an air compression cycle comprising air intake, air compression, and air discharge within the air chamber.

6. The air-maintenance tire system as set forth in at least one of the previous claims further comprising an outlet valve member within the air chamber and moving along the air chamber responsive to air pressure within the air chamber reaching a preset threshold between an open position wherein permitting air flow from the air chamber into the outlet opening and a closed position wherein obstructing air flow from the air chamber into the outlet opening.

7. The air-maintenance tire system as set forth in claim 6 wherein the outlet valve member and the membrane valve member or the flexible membrane member are positioned at opposite ends of the air chamber.

8. The air-maintenance tire system as set forth in at least one of the previous claims further comprising an inlet conduit extending through the tire between the inlet opening and an outward facing side of the tire.

9. The air-maintenance tire system as set forth in at least one of the previous claims comprising an outlet conduit extending from the outlet opening to the tire cavity.

10. The air-maintenance tire system as set forth in at least one of the previous claims wherein the compression actuator means (19) comprises a hollow containment body (44) formed from a resilient deformable material composition and contains a quantity of a non-compressible medium, wherein the containment body (44) is affixed to a relatively high flex-deformation region to the tire carcass (12) and the containment body (44) reciprocally transforms between a deformed state and a non-deformed state responsive to deformation and recovery of the tire high flex-deformation region in a rolling tire, respectively; and wherein the actuator means displaces a pressurized displaced quantity of the non-compressible medium, the pressurized displaced quantity of the non-compressible medium operative to generate a compression force against a membrane valve member surface to move the membrane valve between the open and closed positions within the air chamber.

11. The air-maintenance tire system as set forth in claim 10 wherein the containment body (44) operationally undergoes a cyclic transformation between the deformed state and the non-deformed state during a tire revolution against a ground surface.

12. The air-maintenance tire system as set forth in at least one of the previous claims wherein the membrane valve member in the open position relative to the inlet opening permits air flow from the inlet opening into the air chamber and the piston valve member in the closed position relative to the opening inlet obstructs air flow from the inlet opening into the air chamber, and wherein the membrane valve member during movement between the open and closed positions operatively compresses a volume of air within the air chamber.

13. The air-maintenance tire system as set forth in at least one of the previous claims wherein the outlet valve member in the closed position relative to the outlet opening is operative to move to the open position responsive to air pressure within the air chamber reaching a preset threshold wherein permitting air flow from the air chamber into the outlet opening.

14. The air-maintenance tire system as set forth in at least one of the previous claims comprising an outlet valve member located within the internal air chamber, the outlet valve member operatively moving relative to the internal air chamber between an open position permitting a flow of compressed air from the internal air chamber into the outlet opening and a closed position obstructing a flow of compressed air from the internal air chamber into the outlet opening.
